Europäisches Patentamt

(19) European Patent Office

Office européen des brevets

(11) Publication number: **0 131 054**
**B1**

(12) # EUROPEAN PATENT SPECIFICATION

(45) Date of publication of the patent specification:
05.11.86

(51) Int. Cl.⁴: **H 04 L 27/22,** H 04 L 27/00

(21) Application number: **84900670.5**

(22) Date of filing: **09.01.84**

(86) International application number:
**PCT/US 84/00021⁻**

(87) International publication number:
**WO 84/02819 (19.07.84 Gazette 84/17)**

(54) **CIRCUIT FOR REDUCING ERRORS IN A DATA RECEIVER.**

(30) Priority: **12.01.83 GB 8300732**
**30.06.83 US 509490**

(43) Date of publication of application:
**16.01.85 Bulletin 85/3**

(45) Publication of the grant of the patent:
**05.11.86 Bulletin 86/45**

(84) Designated Contracting States:
**DE FR**

(56) References cited:
**EP-A-0 030 584**
**DE-B-2 627 446**
**FR-A-2 455 403**
**GB-A-2 048 620**
**US-A-3 970 946**
**US-A-4 027 250**
**US-A-4 174 489**
**US-A-4 320 526**

(73) Proprietor: **NCR Corporation, World Headquarters,**
**Dayton, Ohio 45479 (US)**

(72) Inventor: **KAMERMAN, Adriaan,**
**Wenckebachplantsoen 37, NL- 3431 TA**
**Nieuwegein (NL)**

(74) Representative: **Robinson, Robert George,**
**International Patent Department NCR Limited**
**206 Marylebone Road, London NW1 6LY (GB)**

LIBER, STOCKHOLM 1986

## Description

### Technical Field

This invention relates to data receivers of the kind including circuit means compensating for transmission disturbances in a carrier-modulated transmission system, which circuit means includes a correction circuit for correcting a previously equalized received signal, a decision circuit responsive to the corrected received signal to provide output data signals, a difference determinator circuit coupled to an input and an output of said decision circuit and a correction factor determinator circuit coupled to an output of said difference determinator circuit and an input of said correction circuit, wherein said difference determinator circuit is responsive to complex signals representing said corrected received signals and said output data signals to provide complex residual error signals.

### Background Art

Phase shift keying (PSK) - in particular differential PSK (DPSK) - and quadrature amplitude modulation (QAM) are presently used in many systems for data transmission. To represent n discrete data values, k different phase values are used by which a carrier signal is modulated at given clock times. The carrier signal is modulated to m different amplitude levels (for PSK: m = 1) where n ≤ k.m. The data values can also be represented by complex values distributed over m circles, with the zero point as the center. These complex values are then modulated by a complex carrier. Finally only the real Part of the modulated carrier is transmitted, usually after filtering. A representation using complex signals for transmission systems with carrier modulation leads to a brief and clear mathematical description. In a technical implementation, however, pairs of real signals are used instead of complex signals. Preferably these real signals should be related to the complex signals according to the complex number calculus.

Assuming error free transmission, the discrete values transmitted would arrive at the receiver after demodulation of two carrier waves, shifted 90° with respect to each other, by which a complex baseband signal is generated, at sampling instants which were suitably derived. Since disturbances such as: signal distortion (intersymbol interference), additive noise, frequency shift, phase jitter, phase hits, gain variation, always occur during transmission, a suitable means for error compensation must be provided in the receiver. It is practice in the art, to use equalizers for eliminating signal distortion (intersymbol interference). Some of these equalizers can adapt their characteristics to varying distortion conditions.

A data receiver of the kind specified is known from U. S. Patent No. 4,091,331. In the known system the difference determinator provides an output representing the phase difference between the phases of the input and output signals of the decision circuit. This phase difference is fed to a phase error predictor circuit which includes a feedback path and which is controlled by a gain control signal adaptively set in accordance with the ratio between phase jitter and additive noise.

Although the known circuit does result in improved performance where the ratio between phase jitter and additive noise varies, the known circuit has the disadvantage that an undesirable high number of errors does still occur.

US-A-3,970,946 discloses apparatus wherein amplitude-and-phase modulated signals, as received, are represented by corresponding points on a reference signal plane or points embodying the results or demodulation, including phase errors and amplitude errors. A detector produces position signals representative of the corresponding points. A demodulation and error-detection circuit responsive to the position signals produces result signals, phase error signals, and amplitude error signals. Responsive to control signals specifying a predetermined area of the reference signal plane, and to the position, phase error, and amplitude error signals, a selection circuit produces phase and amplitude control signals, which correct the reference signal plane to reduce the phase and amplitude errors of the position signals. After correction, the result signals become the demodulated signals. According to one embodiment (Fig. 13) especially adapted for "pulse amplitude and phase modulation", the control signals for phase errors and amplitude errors initially specify relatively small areas in the reference signal plane, since the initial errors may be large. After sufficient time has elapsed for the errors to converge to relatively small values, the control signals may specify relatively larger areas of the reference signal plane.

### Disclosure of the Invention

It is an object of the present invention to provide a data receiver or the kind specified wherein the aforementioned disadvantage is alleviated.

Therefore, according to the present invention, there is provided a data receiver or the kind specified, characterized in that said correction factor determinator circuit is responsive to said complex residual error signals and to a gain control signal varying in a time dependent manner from an initial signal value when the receiver initially starts to receive transmitted data to a final signal value different from the initial value, whereby said correction factor determinator circuit provides a complex reference signal applied in operation to said correction circuit for compensating for phase and amplitude errors in said data receiver in that said correction factor determinator circuit includes: a first compensation ciruit responsive to the quadrature components of said complex residual error signals and to said gain control signal to provide a compensated output signal which is compensated for frequency shift; and a second compensation circuit responsive to the in-phase components of said complex residual error signals, to said gain control signal and to said compensated output signal and adapted to provide said complex reference signal, in that said gain control signal represents a plurality of gain control factors and in that said first compensation circuit includes a first adder circuit having first and second inputs, a delay element having an input coupled to said first input and an output coupled to a first multiplier circuit for multiplication by a first one of said gain control factors, an output of said first multiplier circuit being coupled to a first input of a second adder circuit having a second input coupled to an output of a second multiplier circuit adapted to multiply the quadrature component of the complex residual error signal by a second one of said gain control factors, an output of said second adder circuit being coupled to an input of said delay element and to the first input of said first adder circuit the second input of said first adder circuit being coupled to an output of a third multiplier circuit adapted to multiply the quadrature component of the complex residual error signal by a third one of said gain control factors.

It will be appreciated that in a circuit according to the invention, since the gain control signal varies in accordance with the time state of the receive process an improved compensation for transmission disturbances is obtained as compared with the known system, in that the occurrence of errors is reduced, since good compensation for errors can be achieved both at initialization and after stabilization.

## Brief Description of the Drawings

The invention will now be described by way of example with reference to the accompanying drawings, in which:

Fig. 1 is a vector diagram illustrating the discrete states and errors that occur in phase shift keying modulation with eight phases (8-PSK);

Fig. 2 is a vector diagram illustrating the discrete states and errors that occur in quadrature amplitude modulation with eight target points (8-QAM);

Fig. 3 is a block diagram of a receiver (without demodulator stage) for recovering discrete data values which were transmitted by modulating the phase and amplitude of a carrier at discrete times;

Fig. 4 illustrates, in a signal flow diagram, the details of a circuit arrangement, helpful in understanding the present invention, that consists of a single proportional feedback loop;

Fig. 5 illustrates, in a signal flow diagram, the details of a circuit arrangement, helpful in understanding the present invention, that consists of a proportional and differential feedback loop;

Fig. 6 illustrates, in a signal diagram, the details of the reference vector determinator included in the circuit of Fig. 3;

Fig. 7 illustrates another embodiment of the reference vector determinator included in the circuit of Fig. 3;

Fig. 8 illustrates, in a signal diagram, the details of the gain factors generator included in the circuit of Fig. 3;

Fig. 9 illustrates, in graphical form, an example of the introduction of phase errors caused by frequency shift and phase jitter, and the compensation of the phase error in case of frequency shift; and

Figs. 10 and 11 illustrate the time variation of the gain factors generated by the circuit of Fig. 8.

## Best Mode for Carrying out the Invention

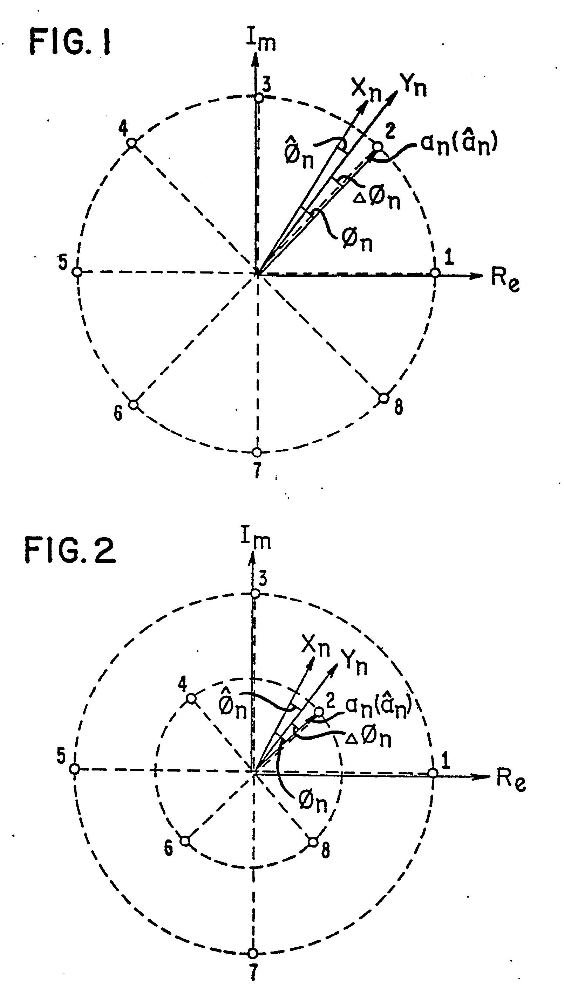

Referring first to Fig. 1, there is shown a signal diagram representing the eight possible discrete states of the signal parameter in an eight-phase PSK transmission system. Each of the eight different states, designated 1 to 8 in Fig. 1 represents a different three-bit code word. Each state corresponds to a complex value, or "pulse amplitude", which can be represented either as $a_n = \exp(j\emptyset_n)$ or as $a_n =$

$$a_{R_n} + ja_{I_n},$$

where $a_{R_n}$

is termed the in-phase component and

$$a_{I_n}$$

the quadrature component.

Fig. 2 shows, in a similar way to Fig. 1, a signal diagram representing the eight possible discrete states of the signal parameter in a 2-amplitude, 8-phase quadrature amplitude modulation (QAM) transmission system. The complex value $a_n = c_n.\exp(j\varnothing_n)$, where $c_n$ is the amplitude.

The system is considered time-discrete, i.e. the discrete values of the signal parameters are defined only for given "sampling times", that occur with period T.

In a transmitter, a carrier signal, e.g. a sinusoidal wave, is modulated in a known manner at each sampling time by one of the eight discrete complex pulse amplitudes $a_n$ (as shown in Figs. 1 and 2). This may be effected by modulating a complex carrier $\exp(jw_ct)$ in phase and amplitude by a complex value $c_n.\exp(j\varnothing_n)$ and transmitting the real part thereof:

$\text{Re}[c_n.\exp(j\varnothing_n).\exp(jw_ct)]$

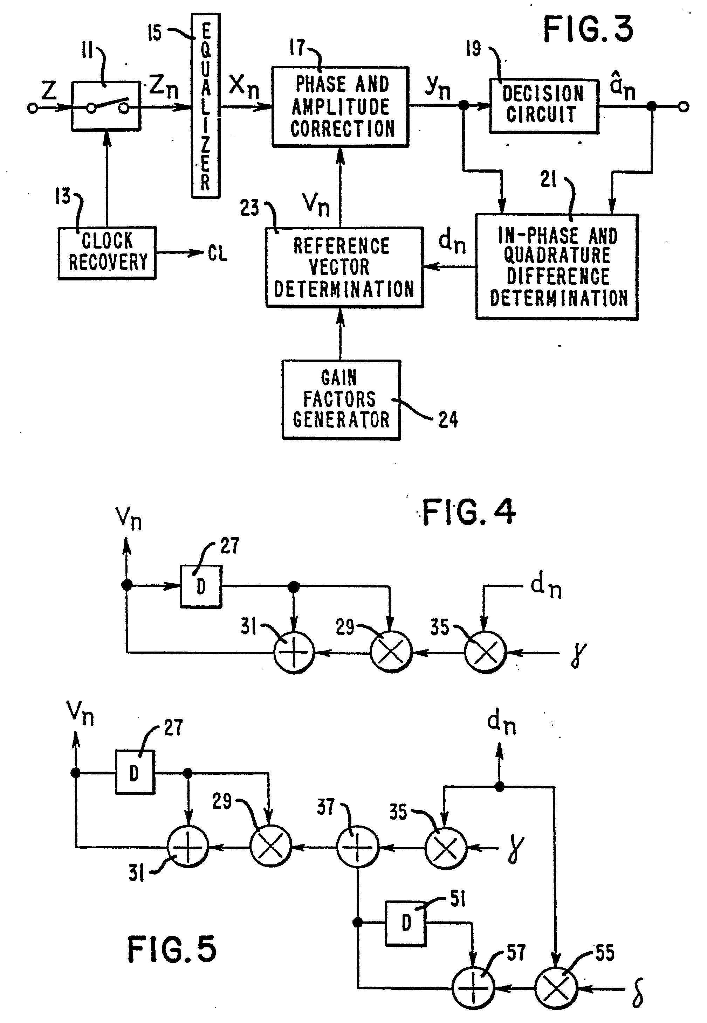

Fig. 3 shows a receiver in which a demodulated complex signal z (in-phase and quadrature components) is sampled by a sampler 11 at intervals T, the sampling times being determined by a clock recovery circuit 13 which derives clock pulses from the received signal. The clock recovery circuit 13 also provides clock signals CL for other units. From the sample values $z_n$ thus obtained, the received pulse amplitude

$$\hat{a}_n$$

must be determined for recovering the transmitted information. A decision circuit 19 is provided for this purpose. However, during transmission the signal is subject to several disturbances, depending on the characteristics of the transmission medium, such as signal distortions, additive noise, phase jitter, phase hits and small gain hits.

Signal distortion is compensated for by an equalizer 15, which operates in discrete time, to obtain an improved signal $x_n$ as shown in Fig. 1 or 2.

However, this signal is still disturbed by phase jitter, additive noise and hits which must be reduced to the largest possible extent to allow correct pulse amplitude determination. To allow phase tracking, a phase and amplitude correction device 17, is provided, that will reduce phase errors and amplitude errors by multiplication with the complex conjugate of a reference vector $v_n$. The resulting value $y_n = x_n.v_n^*$ still has residual phase errors and amplitude errors. A reference vector determinator 23, generates a new reference vector $v_{n+1}$ from the previous reference vector $v_n$ and the estimated in-phase and quadrature error components, in dependence on gain factors derived from a gain factors generating circuit 24, as will be more fully described hereinafter. These estimated errors are derived from the residual errors in a difference determinator circuit 21.

A decision circuit 19 determines the output value

$$\hat{a}_n$$

from $y_n$ by selecting, from one of the eight discrete pulse amplitudes, the one which is closest to $y_n$. The difference determinator for the in-phase and quadrature component 21, receives both $y_n$ and

$$\hat{a}_n$$

and furnishes the value of the residual error $d_n$ with an in-phase and a quadrature component, as input to the reference vector determinator 23. In good approximation the quadrature component $\text{Im}(d_n) = \text{Im}(y_n.$

$$\hat{a}^*_n) = \varnothing_n, \text{ assuming that}$$

$$\left|y_n\right| \cdot \left|\hat{a}^*_n\right| = \left|y_n\right| \cdot \left|\hat{a}_n\right| \approx 1.$$

(Notes: 1. the quantities $\varnothing_n$ and $\Delta\varnothing_n$ are real values in contrast to the complex-value quantities

$$\hat{a}_n,$$

$z_n, x_n, y_n$ and $d_n$.

2.

$$\hat{a}$$

$^*_n$ stands for the complex conjugate of

4

$\hat{a}_n$)

The circuit illustrated in Fig. 4 is explanatory of one aspect of an implementation for determining the reference vector. Referring to Fig. 4, a feedback path for obtaining a revised value $v_n$ for the reference vector includes a multiplier 35, in which the residual error signal from the circuit 21 is multiplied by a given factor $\gamma$. The weighted residual error $\gamma.d_n$ is fed to a second multiplier 29, where the weighted residual error is multiplied with the reference vector $v_n$ from delay element 27. This delay element 27 has a delay time of one sampling period T.

The result of this last multiplication $v_n. \gamma.d_n$ is added in an adder 31 to the value of the reference vector. The arrangement consisting of elements 35, 27, 29 and 31 provides a new value of the reference vector according to the equation $v_{n+1}=v_n + v_n. \gamma.d_n$. (Note that the quantity $\gamma$ is a real value in contrast to the complex value quantities $v_n$ and $d_n$.)

The circuit illustrated in Fig. 5, also explanatory of certain aspects of an implementation for determining the reference vector, illustrates in addition to components corresponding to those in Fig. 4, a differential feedback loop the function of which is to compensate for frequency shift. Thus, the circuit of Fig. 5 additionally includes a multiplier 55, a delay element 51, and adders 57 and 37. The residual error $d_n$ is weighted by multiplication with factor $\delta$ in 55, the result is added in the adder 57 to the contents of the delay element 51. The result of the addition in the adder 57, $e_n$, is an integrated residual error

$\gamma$

$d_n$. This value is added in the adder 37 to the weighted residual error $\gamma.d_n$. (Note that the quantity $\delta$ is a real value.)

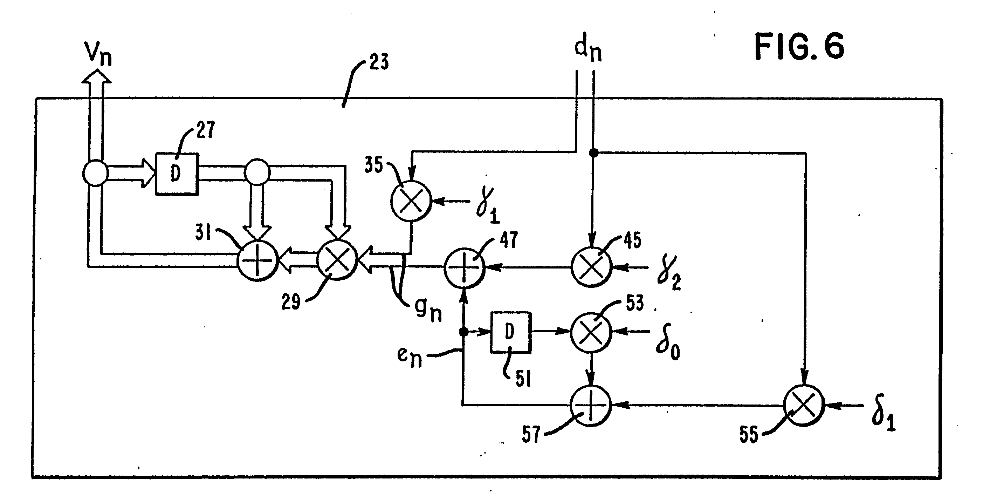

Referring now to Fig. 6, which shows an implementation of the reference vector determinator 23, double lines are used for complex value quantities and single lines for real or imaginary value quantities. It will be appreciated that, in a practical embodiment, complex valued quantities are represented by pairs of real valued quantities derived during the demodulation operation and real valued quantities are represented by digital signals. Furthermore, it should be understood that the various digital processing circuits such as adders, multipliers and delays may be implemented by a digital signal processor integrated circuit. It is assumed that the disturbances still present in $x_n$ (see Fig. 3), i.e. after equalization are: noise, frequency shift, phase jitter, changes in nominal amplitude (small gain hits), and phase hits. Changes in amplitude can be introduced by several reasons, e.g. by impulse noise. The real part (in-phase component) of $d_n$ is multiplied in the multiplier 35 with a factor $\gamma_1$. This provides one input to the proportional feedback circuit for amplitude correction. The result of this multiplication forms the real part of a complex value $g_n$, the output from an adder 47 forming the imaginary part of $g_n$. The complex value $g_n$ constituted by its real part from the multiplier 35 and imaginary part from the adder 47, is multiplied in the multiplier 29 with the output signal from the delay element 27. The processing of the imaginary part up to the adder 47 is realized in a similar way to that shown for the complex values in Fig. 5 (up to adder 37), except for the provision of a multiplier 53 which is coupled to the output of the delay element 51. The factor $\delta_0$ applied to the multiplier 53 controls the decrease in contribution of the contents of the delay element 51, $e_n$, to the addition in 57.

(Note that $e_n$ and $\gamma_1, \gamma_2, \delta_1, \delta_0$ are real valued quantities with $0 < \gamma_1 < 1, 0 < \gamma_2 < 1, 0 < \delta_1 < 1, 0 < \delta_0 < 1$).

It will be appreciated that $e_n$ approximates a value that minimizes the averaged value of the quadrature component (imaginary part) in the residual error $d_n$. This value $e_n$ would correspond to an averaged phase error in $x_n$ caused by frequency shift. (Note that for small $\alpha$, $\sin \alpha \approx \alpha \approx \tan\alpha$).

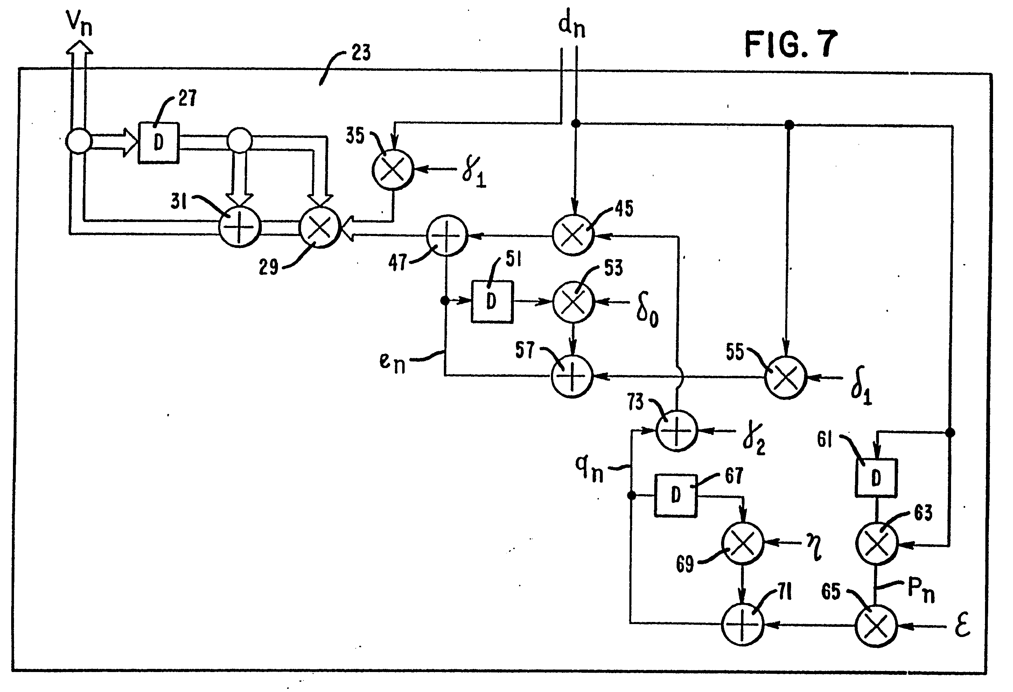

Another embodiment of the reference vector determinator 23 will now be described with reference to Fig. 7. In Fig. 6 the quadrature component (imaginary part) of $d_n$ was multiplied by a factor $\gamma_2$ in the multiplier 45. In Fig. 7 a contribution $q_n$ is added to $\gamma_2$ in an adder 73. This contribution $q_n$ is derived from the quadrature component of $d_n$. The instantaneous correlation present in the quadrature component of $d_n$, $p_n$ is derived by multiplication in a multiplier 63 of the quadrature component of $d_n$ and its previous value, provided by a delay element 61. The averaged correlation $q_n$ is derived from $p_n$ after multiplication in a multiplier 65 by a factor $\varepsilon$ and addition in an adder 71. The previous value of $q_n$, provided by a delay element 67, is multiplied in a multiplier 69 by a factor $\eta$. The result of this multiplication and that from the multiplier 65 are added in an adder 71. The value of $q_n$ is a measure of the averaged correlation in the quadrature component of $d_n$. (Note $p_n, q_n, \varepsilon,$ and $\eta$ are real valued quantities with $0 < \varepsilon < 1, 0 < \eta < 1$).

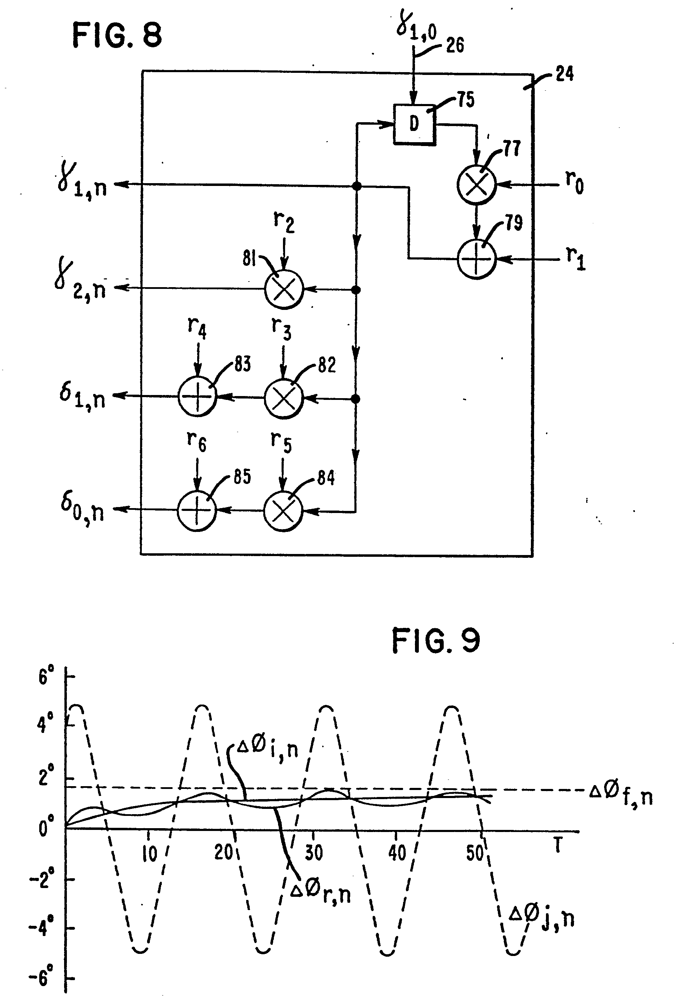

The gain factors generator circuit 24 illustrated in Fig. 8 generates the factors $\gamma_{1,n}, \gamma_{2,n}, \delta_{1,n}, \delta_{0,n}$. These factors have initial values $\gamma_{1,0}, \gamma_{2,0}, \delta_{1,0}, \delta_{0,0}$, the values stabilizing finally at $\gamma_1, \gamma_2, \delta_1, \delta_0$, respectively. It should be understood that these final values are optimal under stable circumstances.

The circuit 24 includes a feedback loop including a delay element 75 having an output coupled to a multiplier 77, an output of which is coupled to an adder 79 having an output fed back to an input of the delay element 75. The output of the adder 79 forms an output of the feedback loop for providing the factor $\gamma_{1,n}$ from which are provided the gain factors $\gamma_{2,n}, \delta_{1,n}$ and $\delta_{0,n}$ as will now be described.

The content of the delay element 75 is set initially to $\gamma_{1,0}$ over an input line 26. Multiplication by a factor $r_0$ in

the multiplier 77, and addition of $r_1$, in the adder 79 results after the first time interval in $\gamma_{1,1}$. Thereafter, the delay element 75 behaves as a normal delay element, and $\gamma_{1,n}$ is produced from the output of the adder 79. A multiplier 81 produces $\gamma_{2,n}$ from $\gamma_{1,n}$ and the factor $r_2$. An adder 83 produces $\delta_{1,n}$ from the output of the multiplier 82 and the constant $r_4$. An adder 85 produces $\delta_{0,n}$ from the output of the multiplier 84 and constant $r_6$. (Note $\gamma_{1,n}, \gamma_{2,n}, \delta_{1,n}, \delta_{0,n}$ and $r_0, r_1, r_2, r_3, r_4, r_5, r_6$ are real value quantities).

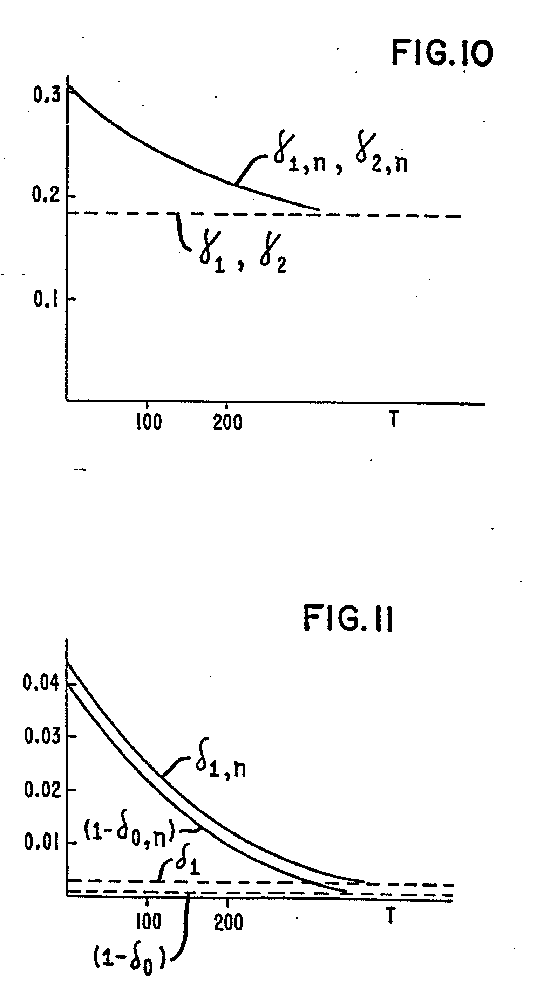

The time variation of the factor $\gamma_{1,n}$ and $\gamma_{2,n}$ with respect to the number of time intervals T is shown in Fig. 10 and the time variation of the factors $\delta_{0,n}$ and $\delta_{1,n}$ with respect to the number of time intervals T is shown in Fig. 11.

In an environment where the receiver is connected to multiple transmitters each having their own transmission path, the behavior of the receiver immediately after the start of receiving requires special attention. Fast and proper initialization, followed by a fast stabilization of the circuit shown in Figs. 6 or 7, will save inactive time in the beginning of a new transmission period. For short transmission periods, with receiver input from different transmission paths, this behavior is of special interest.

In the gain factors generator circuit 24, the factors are initially set at $\gamma_{1,0}, \gamma_{2,0}, \delta_{1,0}, \delta_{0,0}$ and will finally converge to the $\gamma_1, \gamma_2, \delta_1, \delta_0$, the latter being their optimal values after stabilization. The values $\gamma_1, \gamma_2, \delta_1, \delta_0$ should be optimal for the type of modualtion and the signalling rate that is used and the disturbances that can be expected in $x_n$, i.e., after equalization.

Since the integration loop in Figs. 6 and 7, consisting of the elements 51, 53, 57 and 55 is intended to compensate for frequency shift, $\delta_1$ should be close to 0 and $\delta_0$ close to 1. It will be appreciated that the values of $\delta_1$ and $\delta_0$ determine the speed and gain of the integration loop.

Initially, the content of the delay element 51, Figs. 6 and 7, is set to 0, and should converge to a quantity corresponding to the phase offset during one sampling period T introduced by frequency shift.

The content $e_n$ of the delay element 51 is derived by the following equations:

$$e_0 = 0$$
$$e_n = \delta_{1,n}.\text{Im}(d_n) + \delta_{0,n}.e_{n-1} \quad n > 1$$

For accurate frequency shift compensation in the presence of disturbances other than frequency shift (like noise and phase jitter) $\delta_1$ should be close to 0 and $\delta_0$ should be even closer to 1.

In the period shortly after initialization when n is a small number, a small value for $\delta_{1,n}$ will cause a slow stabilization of $e_n$, a high value for $\delta_1$ will introduce a contribution from phase jitter and noise in $e_n$. In the present embodiment a $\delta_{1,n}$ decreases from a relatively high value to a low value. The disturbance in $e_n$, introduced by phase jitter and noise, during the intervals after start up, can be diminished by choosing $\delta_{0,n}$ to be less than 1. However, when $\delta_{0,n}$ differs from 1 the frequency shift compensation is reduced. Therefore $\delta_{0,n}$ is caused to increase to 1. The decrease of $\delta_{1,n}$ and the increase of $\delta_{0,n}$ should be optimal for the fast stabilization of frequency shift compensation in the presence of noise and phase jitter during transmission.

The gain factors $\gamma_{1,n}$ and $\gamma_{2,n}$ are initially at higher values than their optimal values after stabilization, namely $\gamma_1$ and $\gamma_2$.

Furthermore, to diminish the negative effect of the contribution of $q_n$ (see Fig. 7) in the periods shortly after initialization, $\varepsilon$ is selected to be very small, whereby $q_n$ will therefore increase slowly to its final value in the stabilized state. The contribution of $q_n$ in the periods shortly after initialization is not significant.

The arrangement illustrated in Fig. 8 to derive the gain factors $\gamma_{1,n}, \gamma_{2,n}, \delta_{1,n}$ and $\delta_{0,n}$ can be described by the following equations:

for $n > 1$: $\gamma_{1,n} = r_1 + r_0 . \gamma_{1,n-1}$

$$= r_1 . \left( \sum_{j=1}^{n-1} r_0^j \right) + r_0^n . \gamma_{1,0}$$

$$= r_1 . \frac{(1 - r_0^n)}{1 - r_0} + r_0^n . \gamma_{1,0}$$

$$\gamma_{2,n} = r_2 . \gamma_{1,n}$$
$$\delta_{1,n} = r_3 . \gamma_{1,n} + r_4$$
$$\delta_{0,n} = r_5 . \gamma_{1,n} + r_6$$

Since $0 < r_0 < 1$ the factors $\gamma_{1,n}, \gamma_{2,n}, \delta_{1,n}, \delta_{0,n}$ will converge to respectively $\gamma_1, \gamma_2, \delta_1, \delta_0$:

$$\gamma_{1,n} \longrightarrow \gamma_1 = \frac{r_1}{1-r_0}$$

$$\gamma_{2,n} \longrightarrow \gamma_2 = \frac{r_2 \cdot r_1}{1-r_0}$$

$$\delta_{1,n} \longrightarrow \delta_1 = \frac{r_3 \cdot r_1}{1-r_1} + r_4$$

$$\delta_{0,n} \longrightarrow \delta_0 = \frac{r_5 \cdot r_1}{1-r_0} + r_6$$

Fig. 9 shows an example of frequency shift and phase jitter disturbances present in $x_n$, i.e., after equalization. The x-axis in Fig. 9 represents the number of intervals T. In this example a frequency shift of 7Hz, and sinusoidal phase jitter of 10° peak-to-peak and 180 Hz repetition is assumed. In the receiver with a 1600 Baud signalling rate, 7Hz frequency shift corresponds to 1.575° phase change per sampling period T (or symbol interval), $\Delta \varnothing_{f,n}$. In Fig. 9, the phase jitter corresponds to phase changes between -1.6° and +1.6° per sampling period T. In this Fig- $\Delta \varnothing_{i,n}$ and $\Delta \varnothing_{r,n}$ represent respectively the ideal and realized phase error compensation. The alternation in $\Delta \varnothing_{r,n}$ with respect to $\Delta \varnothing_{i,n}$ decreased in correspondence with a decrease in $\delta_{1,n}$. The differences between $\Delta \varnothing_{r,n}$ and $\Delta \varnothing_{i,n}$ have to be diminished because this kind of phase difference, introduced by phase jitter, results in lagging. In practice the phase of $x_n$ will be disturbed also by other effects such as noise.

Experimental results for an 4800 bps QAM modem receiver in the presence of various disturbances led to a set of favorable factor values.

These disturbances were:
- noise, C-message weighted, SNR (signal-to-noise ratio) 12-40 dB
- frequency shift. 0-10Hz
- phase jitter, 0-10° with repetition 50-200Hz

and the factor values:

$\gamma_{1,0} = 0.31; \gamma_1 = 0.18$
$\gamma_{2,0} = 0.31. \gamma_2 = 0.18$
$\delta_{1,0} = 0.044; \delta_1 = 0.002$
$\delta_{0,0} = 0.958; \delta_0 = 0.99994$

(It should be understood that C-message noise is the total frequency weighted noise measured in the absence of a signal).

During these experiments $q_n$ (see Fig. 7) was kept to 0 by selecting the factor $\varepsilon = 0$. These experimental results were concerned with the probability of an error in the first 80 or 800 bits after the receiver training and with the probability of bit errors after stabilization.

The decrease in $\gamma_{1,n}$, $\gamma_{2,n}$, and $\gamma_{1,n}$, and the increase in $\delta_{n,n}$ were realized by selecting suitable values for $r_0$, $r_1, ..., r_6$ (see Fig. 8; $0 < r_i < 1$ for $i = 1, 2, 3, 6$ and $-1 < r_i < 0$, if $i = 4, 5$).

The experimental results were most favorable for a decrease in $\gamma_{1,n}$, $\gamma_{2,n}$, $\delta_{1,n}$ and increase in $\delta_{0,n}$ realized by a factor $r_0 = 0.9946$ and addition constant $r_1 = 0.00098$.

Using the same 4800 bps modem as above, experiments were made where the contribution of $q_n$ was used. Most favorable factor values were:

$\gamma_{1,0} = 0.31; \gamma_1 = 0.15$
$\gamma_{2,0} = 0.27; \gamma_2 = 0.11$
$\delta_{1,0} = 0.044; \delta_1 = 0.001$
$\delta_{0,0} = 0.956; \delta_0 = 0.99994$
$\varepsilon = 0.0625; \eta = 0.99976$

The allowable SNR LEVEL (only C-message noise was considered) for a bit error rate of $10^{-5}$ was 15.7 dB with the above set of factor values, and 16.1 dB with the set of constants for the situation where $q_n$ was kept 0 because $\varepsilon = 0$. However, in the presence of hits, the last set of factor values delivers an inferior performance compared with those of the first experiment.

Initially the reference vector $v_n$ is set to a value $v_0 = l/x_0$.

During an initialization that is part of a self-recovery operation, the factors $\gamma_{1,n}$ $\gamma_{2,n}$ and $\delta_{1,n}$ are

7

advantageously set to larger values, the procedure for initializing the reference vector $v_n$ is the same as above and the manner of changing the factors $\gamma_{1,n}$, $\gamma_{2,n}$ and $\delta_{1,n}$ is maintained. When there exist large errors during detection, the error $d_n$ may exceed a certain threshold. When this occurs the reference vector is initialized again, keeping the instantaneous compensation $e_n$ stored in the delay element 51 unchanged and also keeping the equalizer 15 unchanged. Under very bad conditions during transmission, it can be hard to train the receiver according to the principles of self-recovery equalization. Saving the compensation $e_n$ that was built up during a self-recovery operation, and initializing the reference vector $v_n$ again is advantageous in such conditions. Experiments for a 4800 bps QAM modem in the presence of much disturbance resulted in favorable results with the following values for $\gamma_{1,n}$, $\gamma_{2,n}$, $\delta_{1,n}$, $\delta_{0,n}$ and $\varepsilon$.

$\gamma_{1,0} = 0.4$; $\gamma_1 = 0.18$

$\gamma_{2,0} = 0.4$; $\gamma_2 = 0.18$

$\delta_{1,0} = 0.044$; $\delta_1 = 0.002$

$\delta_{0,0} = 0.958$; $\delta_0 = 0.99994$

$\varepsilon = 0$

## Claims

1. A data receiver, including circuit means compensating for transmission disturbances in a carrier-modulated transmission system, which circuit means includes a correction circuit (17) for correcting a previously equalized received signal $(x_n)$, a decision circuit (19) responsive to the corrected received signal $(y_n)$ to provide output data signals $(\hat{a}_n)$, a difference determinator circuit (21) coupled to an input and an output of said decision circuit (19) and a correction factor determinator circuit (23) coupled to an output or said difference determinator circuit (21) and an input of said correction circuit (17), wherein said difference determinator circuit (21) is responsive to complex signals representing said corrected received signals $(y_n)$ and said output data signals $(\hat{a}_n$ to provide complex residual error signals $(d_n)$, characterized in that said correction factor determinator circuit (23) is responsive to said complex residual error signals $(d_n)$ and to a gain control signal $(\gamma_1, \gamma_2, \delta_0, \delta_1)$ varying in a time dependent manner from an initial signal value when the receiver initially starts to receive transmitted data to a final signal value different from the initial value, whereby said correction factor determinator circuit (23) provides a complex reference signal $(v_n)$ applied in operation to said correction circuit (17) for compensating for phase and amplitude errors in said data receiver, in that said correction factor determinator circuit (23) includes: a first compensation circuit (45, 47, 51, 53, 55, 57) responsive to the quadrature components of said complex residual error signals $(d_n)$ and to said gain control signal $(\gamma_1, \gamma_2, \delta_0, \delta_1)$ to provide a compensated output signal which is compensated for frequency shift; and a second compensation circuit (27, 29, 31, 35) responsive to the in-phase components of said complex residual error signals $(d_n)$, to said gain control signal $(\gamma_1, \gamma_2, \delta_0, \delta_1)$ and to said compensated output signal and adapted to provide said complex reference signal $(v_n)$ in that said gain control signal represents a plurality of gain control factors $(\gamma_1, \gamma_2, \delta_0, \delta_1)$ and in that said first compensation circuit includes a first adder circuit (47) having first and second inputs, a delay element (51) having an input coupled to said first input and an output coupled to a first multiplier circuit (53) for multiplication by a first one of said gain control factors $(\delta_0)$, an output of said first multiplier circuit being coupled to a first input of a second adder circuit (57) having a second input coupled to an output of a second multiplier circuit (55) adapted to multiply the quadrature component of the complex residual error signal $(d_n)$ by a second one of said gain control factors $(\delta_1)$, an output of said second adder circuit (57) being coupled to an input of said delay element (51) and to the first input of said first adder circuit (47), the second input of said first adder circuit (47) being coupled to an output of a third multiplier circuit (45) adapted to multiply the quadrature component or the complex residual error signal $(d_n)$ by a third one of said gain control factors $(\gamma_2)$.

2. A data receiver according to claim 1, characterized in that said second compensation circuit includes: a fourth multiplier circuit (29) having a first complex input adapted to receive an output of said first adder circuit (47) as quadrature component and to receive as in-phase component, an output of a fifth multiplier circuit (35) adapted to multiply the in-phase component of said complex residual error signal $(d_n)$ by a fourth one of said gain control factors $(\gamma_1)$, said fourth multiplier circuit (29) having a second complex input coupled to an output of a further delay element (27); a third adder circuit (31) having inputs coupled to an output of said fourth multiplier circuit (29) and said output of said further delay element (27) and an output coupled to an input of said further delay element (27) and adapted to provide said complex reference signal $(v_n)$.

3. A data receiver according to claim 2, characterized by correlation circuit means (61, 63, 65, 67, 69, 71) responsive to the quadrature component of said complex residual error signal $(d_n)$ and adapted to provide averaged correlation signals $(q_n)$ arranged to modify said third one of said gain control factors $(\gamma_2)$, said third multiplier circuit (45) being arranged to multiply the quadrature component of the complex residual error signal $(d_n)$ by the modified third one of said gain control factors.

4. A data receiver according to claim 3, characterized by a fourth adder circuit (73) having inputs adapted to receive said averaged correlation signal $(q_n)$ and said third one of said gain control factors $(\gamma_2)$ and having an output coupled to an input of said third multiplier circuit (45).

5. A data receiver according to claim 4, characterized by a gain factors generator circuit (24) adapted to

0 131 054

generate said first, second, third and fourth gain control factors ($\gamma_1$, $\gamma_2$, $\delta_0$, $\delta_1$), said gain factors generator circuit including a feedback loop (75, 77, 79) and being responsive to a plurality of predetermined factors ($r_0$-$r_6$) whereby each of said gain control factors ($\gamma_1$, $\gamma_2$, $\delta_0$, $\delta_1$) is dependent on an output of said feedback loop (75, 77, 79) and on at least one of said predetermined factors ($r_0$-$r_6$).

6. A data receiver according to claim 5, characterized in that said first one of said gain control factors ($\delta_0$) is arranged to increase towards a value which is close to unity and said second one of said gain control factors ($\delta_1$) is arranged to decrease towards a value which is close to zero.

## Patentansprüche

1. Datenempfänger mit einer Schaltungsanordnung zum Kompensieren von übertragungsstörungen in einem trägermodulierten Übertragungssystem, welche Schaltungsanordnung eine Korrekturschaltung (17) zum Korrigieren eines zuvor entzerrt empfangenen Signales ($x_n$), sowie eine Entscheidungsschaltung (19), die auf das korrigierte empfangene Signal ($y_n$) anspricht, um Ausgangsdatensignale ($â_n$) abzugeben, eine Differenzbestimmungsschaltung (21), die mit einem Eingang und einem Ausgang der Entscheidungsschaltung (19) gekoppelt ist und eine Korrekturfaktor-Bestimmungsschaltung (23) aufweist, mit einem Ausgang der Differenzbestimmungsschaltung (21) und einem Eingang der.Korrekturschaltung (17) gekoppelt ist, wobei die Differenzbestimmungsschaltung (21) auf komplexe Signale anspricht, die die korrigierten empfangenen Signale ($y_n$) und die Ausgangsdatensignale ($â_n$) darstellen, um komplexe Restfehlersignale ($d_n$) abzugeben, dadurch gekennzeichnet, daß die Korrekturfaktor-Bestimmungsschaltung (23) anspricht auf die komplexen Restfehlersignale ($d_n$) und auf ein Verstärkungsfaktor-Steuersignal ($\gamma_1$, $\gamma_2$, $\delta_0$, $\delta_1$), das in zeitabhängiger Art von einem Anfangssignalwert, wenn der Empfänger anfänglich beginnt übertragene Daten zu empfangen, bis zu einem Endsignalwert sich ändert, der sich von dem Anfangswert unterscheidet, wodurch die Korrekturfaktor-Bestimmungsschaltung (23) ein komplexes Bezugssignal ($v_n$) abgibt, das im Betrieb an die Korrekturschaltung (17) zum Kompensieren von Phasenund Amplitudenfehlern in dem Datenempfänger angelegt wird, daß die Korrekturfaktor-Bestimmungsschaltung (23) aufweist: eine erste Kompensationsschaltung (45, 47, 51, 53, 55, 57), die auf um 90° phasenverschobene Komponenten des komplexen Restfehlersignals ($d_n$) und auf das Verstärkungsfaktor-Steuersignal ($\gamma_1$, $\gamma_2$, $\delta_0$, $\delta_1$) anspricht, um ein kompensiertes Ausgangssignal abzugeben, das bezüglich einer Frequenzverschiebung kompensiert ist; und eine zweite Kompensationsschaltung (27, 29, 31, 35), die auf Inphasekomponenten des komplexen Restfehlersignals ($d_n$), auf das Verstärkungsfaktor-Steuersignal ($\gamma_1$, $\gamma_2$, $\delta_0$, $\delta_1$) und auf das kompensierte Ausgangssignal anspricht und geeignet ist, das komplexe Bezugssignal ($v_n$) abzugeben, daß das Verstärkungsfaktor-Steuersignal eine Vielzahl von Verstärkungssteuerfaktoren ($\gamma_1$, $\gamma_2$, $\delta_0$, $\delta_1$) darstellt und daß die erste Kompensationsschaltung eine erste Addierschaltung (47) mit einem ersten und zweiten Eingang, und ein Verzögerungselement (51) aufweist, das einen Eingang mit dem ersten und einen Ausgang mit einer ersten Multiplizierschaltung (53) zur Multiplikation mit einem ersten der Verstärkungssteuerfaktoren ($\delta_0$) gekoppelt hat, wobei ein Ausgang der ersten Multiplizierschaltung mit einem ersten Eingang einer zweiten Addierschaltung (57) gekoppelt ist, die einen zweiten Eingang mit einem Ausgang einer zweiten Multiplizierschaltung (55) gekoppelt hat, die geeignet ist, die um 90° phasenverschobene Komponente des komplexen Restfehlersignals ($d_n$) mit einem zweiten der Verstärkungssteuerfaktoren ($\delta_1$) zu multiplizieren, wobei ein Ausgang der zweiten Addierschaltung (57) mit einem Eingang des Verzögerungselements (51) und mit dem ersten Eingang der ersten Addierschaltung (47) gekoppelt hat, wobei der zweite Eingang der ersten Addierschaltung (47) mit einem Eingang einer dritten Multiplizierschaltung (45) gekoppelt ist, die geeignet ist, die um 90° phasenverschobene Komponente des komplexen Restfehlersignals ($d_n$) mit einem dritten der Verstärkungssteuerfaktoren ($\gamma_2$) zu multiplizieren.

2. Datenempfänger nach Anspruch 1, dadurch gekennzeichnet, daß die zweite Kompensationsschaltung aufweist: eine vierte Multiplizierschaltung (29), die einen ersten komplexen Eingang aufweist, der geeignet ist, ein Ausgangssignal der ersten Addierschaltung (47) als um 90° phasenverschobene Komponente zu empfangen und als Inphasenkomponente ein Ausgangssignal einer fünften Multiplizierschaltung (35) zu empfangen, die geeignet ist, die Inphasekomponente des komplexen Restfehlersignals ($d_n$) mit einem Vierten der Verstärkungssteuerfaktoren ($\gamma_1$) zu multiplizieren, wobei die vierte Multiplizierschaltung (29) einen zweiten komplexen Eingang mit einem Ausgang eines weiteren Verzögerungselements (27) gekoppelt hat, eine dritte Addierschaltung (31), die ihre Eingänge mit einem Ausgang der vierten Multiplizierschaltung (29) und mit dem Ausgang des weiteren Verzögerungselements (27) verbunden hat und einen Ausgang mit einem Eingang des weiteren Verzögerungselements (27) gekoppelt hat und geeignet ist, das komplexe Bezugssignal ($v_n$) abzugeben.

3. Datenempfänger nach Anspruch 2, gekennzeichnet durch Korrelationsschaltungsmittel (61, 63, 65, 67, 69, 71), die auf die um 90° phasenverschobene Komponente des komplexen Restfehlersignals ($d_n$) anspricht und geeignet ist, gemittelte Korrelationssignale ($q_n$) abzugeben, die angeordnet sind, um den dritten der Verstärkungssteuerfaktorn ($\gamma_2$) zu modifizieren, wobei die dritte Multiplizierschaltung (45) angeordnet ist, um die um 90° phasenverschobene Komponente des komplexen Restfehlersignals ($d_n$) mit dem modifizierten dritten der Verstärkungssteuerfaktoren zu multiplizieren.

4. Datenempfänger nach Anspruch 3, gekennzeichnet durch eine vierte Addierschaltung (73), die Eingänge besitzt, die geeignet sind, das gemittelte Korrelationssignal ($q_n$) und den dritten der

9

Verstärkungssteuerfaktoren $\gamma_2$) zu empfangen, sowie einen Ausgang, der mit einem Eingang der dritten Multiplizierschaltung (45) gekoppelt ist.

5. Datenempfänger nach Anspruch 4, gekennzeichnet durch eine Verstärkungsfaktor-Erzeugungsschaltung (24), die geeignet ist, den ersten, zweiten, dritten und vierten Verstärkungssteuerfaktor ($\gamma_1$, $\gamma_2$, $\delta_0$, $\delta_1$) zu erzeugen, wobei die Verstärkungsfaktor-Erzeugungsschaltung eine Rückkopplungsschleife (75, 77, 79) aufweist und auf eine Vielzahl von vorbestimmten Faktoren ($r_0$ bis $r_6$) anspricht, wodurch jeder der Verstärkungssteuerfaktoren ($\gamma_1$, $\gamma_2$, $\delta_0$, $\delta_1$) abhängig ist von einem Ausgangssignal der Rückkopplungsschleife (75, 77, 79) und zumindest einem der vorbestimmten Faktoren ($r_0$ bis $r_6$).

6. Datenempfänger nach Anspruch 5, dadurch gekennzeichnet, daß der erste der Verstärkungssteuerfaktoren ($\delta_0$) angeordnet ist, um in Richtung eines Wertes anzusteigen, der nahe 1 ist, und daß der zweite der Verstärkungssteuerfaktoren ($\delta_1$) angeordnet ist in Richtung auf einen Wert abzufallen, der nahe 0 ist.

## Revendications

1. Récepteur de données, comprenant des moyens à circuits compensant les perturbations de transmission dans un système de transmission à modulation de porteuse, lesquels moyens à circuits comprennent un circuit (17) de correction destiné à corriger un signal reçu ($x_n$), précédemment égalisé, un circuit (19) de décision qui, en réponse au signal reçu corrigé ($y_n$), produit des signaux de données de sortie ($\hat{a}_n$), un circuit (21) de détermination de différence couplé à une entrée et à une sortie dudit circuit de décision (19) et un circuit (23) de détermination du facteur de correction couplé à une sortie dudit circuit (21) de détermination de différence et à une entrée dudit circuit de correction (17), dans lequel ledit circuit (21) de détermination de différence réagit à les signaux complexes représentant lesdits signaux reçus corrigés ($y_n$) et lesdits signaux de données de sortie ($\hat{a}_n$) en produisant des signaux d'erreurs résiduelles complexes ($d_n$), caractérisé en ce que ledit circuit (23) de détermination du facteur de correction réagit auxdits signaux d'erreurs résiduelles complexes ($d_n$) et à un signal de commande de gain ($\gamma_1$, $\gamma_2$, $\delta_0$, $\delta_1$) variant d'une manière dépendant du temps, d'une valeur de signal initiale lorsque le récepteur commence initialement à recevoir des données transmises à une valeur de signal finale différente de la valeur initiale, de manière que ledit circuit (23) de détermination du facteur de correction produise un signal de référence complexe ($v_n$) appliqué, en fonctionnement, audit circuit de correction (17) afin de compenser les erreurs de phase et d'amplitude dans ledit récepteur de données, en ce que ledit circuit (23) de détermination du facteur de correction comprend: un premier circuit de compensation (45, 47, 51, 53, 55, 57) qui, en réponse aux composantes en quadrature desdits signaux d'erreurs résiduelles complexes ($d_n$) et dudit signal de commande de gain ($\gamma_1$, $\gamma_2$, $\delta_0$, $\delta_1$)' produit un signal de sortie compensé dont le décalage de fréquence est compensé; et un second circuit de compensation (27, 29, 31, 35) sensible aux composantes en phase desdits signaux d'erreurs résiduelles complexes ($d_n$), dudit signal de commande de gain ($\gamma_1$, $\gamma_2$, $\delta_0$, $\delta_1$) et dudit signal de sortie compensé et destiné à produire ledit signal de référence complexe ($v_n$), en ce que ledit signal de commande de gain représente plusieurs facteurs de commande de gain ($\gamma_1$, $\gamma_2$, $\delta_0$, $\delta_1$), et en ce que ledit premier circuit de compensation comprend un premier circuit additionneur (47) ayant des première et seconde entrées, un élément de temporisation (51) ayant une entrée couplée à ladite première entrée et une sortie couplée à un premier circuit multiplicateur (53) afin d'être multipliée par un premier desdits facteurs de commande de gain ($\delta_0$), une sortie dudit premier circuit multiplicateur étant couplée à une première entrée d'un deuxième circuit additionneur (57) ayant une seconde entrée couplée à une sortie d'un deuxième circuit multiplicateur (55) destiné à multiplier la composante en quadrature du signal d'erreur résiduelle complexe ($d_n$) par un deuxième desdits facteurs de commande de gain ($\delta_1$), une sortie dudit deuxième circuit additionneur (57) étant couplée à une entrée dudit élément de temporisation (51) et à la première entrée dudit premier circuit additionneur (47), la seconde entrée dudit premier circuit additionneur (47) étant couplée à une sortie d'un troisième circuit multiplicateur (45) destiné à multiplier la composante en quadrature du signal d'erreur résiduelle complexe ($d_n$) par un troisième desdits facteurs de commande de gain ($\gamma_2$).

2. Récepteur de données selon la revendication 1, caractérisé en ce que ledit second circuit de compensation comprend: un quatrième circuit multiplicateur (29) ayant une premièe entrée complexe destinée à recevoir une sortie dudit premier circuit additionneur (47) en tant que composante en quadrature et à recevoir, en tant que composante en phase, une sortie d'un cinquième circuit multiplicateur (35) destiné à multiplier la composante en phase dudit signal d'erreur résiduelle complexe ($d_n$) par un quatrième desdits facteurs de commande de gain ($\gamma_1$), ledit quatrième circuit multiplicateur (29) ayant une seconde entrée complexe couplée à une sortie d'un autre élément de temporisation (27); un troisième circuit additionneur (31) ayant des entrées couplées à une sortie dudit quatrième circuit multiplicateur (29) et à ladite sortie dudit autre élément de temporisation (27) et une sortie couplée à une entrée dudit autre élément de temporisation (27) et destinée à produire ledit signal de référence complexe ($v_n$).

3. Récepteur de données selon la revendication 2, caractérisé par des moyens de circuits de corrélation (61, 63, 65, 67, 69, 71) sensibles à la composante en quadrature dudit signal d'erreur résiduelle complexe ($d_n$) et destinés à produire des signaux de corrélation moyens ($q_n$) établis pour modifier ledit troisième desdits facteurs de commande de gain ($\gamma_2$), ledit troisième circuit multiplicateur (45) étant agencé de façon à multiplier la composante en quadrature du signal d'erreur résiduelle complexe ($d_n$) par le troisième, modifié, desdits facteurs de commande de gain.

4. Récepteur de données selon la revendication 3, caractérisé par un quatrième circuit additionneur (73) comportant des entrées destinées à recevoir ledit signal de corrélation moyen ($q_n$) et ledit troisième desdits facteurs de commande de gain ($\gamma_2$) et comportant une sortie couplée à une entrée dudit troisième circuit multiplicateur (45).

5. Récepteur de données selon la revendication 4, caractérisé par un circuit (24) générateur de facteurs de gain destiné à générer lesdits premier, deuxième, troisième et quatrième facteurs de commande de gain ($\gamma_1$, $\gamma_2$, $\delta_0$, $\delta_1$), ledit circuit générateur de facteurs de gain comprenant une boucle de réaction (75, 77, 79) et étant sensible à plusieurs facteurs prédéterminés ($r_0$-$r_6$) de manière que chacun desdits facteurs de commande de gain ($\gamma_1$, $\gamma_2$, $\delta_0$, $\delta_1$) dépende d'une sortie de ladite boucle de réaction (75, 77, 79) et d'au moins l'un desdits facteurs prédéterminés ($r_0$-$r_6$).

6. Récepteur de données selon la revendication 5, caractérisé en ce que ledit premier desdits facteurs de commande de gain ($\delta_0$) est établi de façon à s'élever vers une valeur qui est proche de l'unité et ledit deuxième desdits facteurs de commande de gain ($\delta_1$) est établi de façon à diminuer vers une valeur qui est proche de zéro.

**FIG. 1**

**FIG. 2**

# FIG.3

# FIG.4

# FIG.5

FIG. 6

FIG. 7

0 131 054

0 131 054

# FIG. 8

$\gamma_{1,0}$ 26

$\gamma_{1,n}$

$\gamma_{2,n}$

$\delta_{1,n}$

$\delta_{0,n}$

# FIG. 9

$\Delta\emptyset_{i,n}$

$\Delta\emptyset_{f,n}$

$\Delta\emptyset_{r,n}$

$\Delta\emptyset_{j,n}$

9

# FIG.10

# FIG.11